# EUROPEAN PATENT APPLICATION

(11) **EP 3 637 771 A1**
(43) Date of publication of application: **15.04.2020**
(21) Application number: 18813545.3
(22) Date of filing: 24.04.2018
(51) Int. Cl.: H04N 19/42

(54) **CLOUD DESKTOP SYSTEM, AND IMAGE SEQUENCE COMPRESSION AND ENCODING METHOD, AND MEDIUM THEREFOR**

(30) Priority: 05.06.2017 CN 201710413408
(71) Applicant: ZTE Corporation, Shenzhen, Guangdong 518057 (CN)
(72) Inventor: PU, Yuliang, Shenzhen Guangdong 518057 (CN)
(74) Representative: Baudler, Ron
(86) International application number: PCT/CN2018/084262
(87) International publication number: WO 2018/223786

(57) **Abstract**

Disclosed are a cloud desktop system, and an image sequence compression and encoding method and medium therefor. The system comprises a server and at least one externally connected device connected to each other by means of a bus. The method is used for the server, and comprises: invoking an externally connected device to execute an encoding process capable of parallel pipeline processing and pre-set in a pre-arranged image encoding module; acquiring, from the externally connected device, result data obtained after the execution of the encoding process; and invoking the image encoding module, such that the image encoding module completes cloud desktop image sequence compression and encoding according to the result data.

## Description

### TECHNICAL FIELD

The present disclosure relates to the field of cloud computing, and in particular to a cloud desktop system, and an image sequence compression encoding method and medium thereof.

### BACKGROUND

With the rapid development of mobile Internet, cloud desktop applications have been used by more and more people. The cloud desktop separates the personal computer desktop environment from the physical machine through the cloud computing mode, and becomes a desktop service that can be provided externally. At the same time, the computing and storage resources required by the personal desktop environment are concentrated on the server to replace the local computing and storage of the client. The computing and storage resources of the server are shared and scalable, and it is possible to allocate the resources to different clients as needed and improve resource utilization. With the cloud desktop applications, the client can access the cloud desktop for office work through a terminal device that can be connected to the network, such as a personal computer PC, a laptop, a netbook, a tablet PC, or a mobile phone, and thus a new era of mobile office has come.

Under VDI (Virtual Desktop Infrastructure) cloud desktop architecture, one server can turn on tens to hundreds of virtual machines at the same time. The server management center can assign virtual machines to users. After the users are connected to the virtual machines through the preset transport protocol at the client terminal, the virtual desktop is presented to the users.

In order to present the contents of the virtual desktop to the users, the server compresses and encodes desktop image sequences of tens or even hundreds of virtual machines at the same time. Such encoding works consume a large amount of CPU resources, resulting in a limit on the maximum number of virtual machines that can be turned on (run) by one server. Accordingly, cost is increased.

### SUMMARY

The following is a summary of subject matters described in detail herein. This summary is not intended to limit the protection scope of the claims.

The present disclosure provides a cloud desktop system, and an image sequence compression encoding method and medium thereof, for reducing at least CPU usage of a server host.

The present disclosure provides an image sequence compression encoding method for a cloud desktop system, wherein the system includes a server and at least one external device which are connected by a bus. The method is used for the server, and includes:
calling an external device to perform an encoding process which is preset in a preset image encoding module and can be processed in a pipeline parallel mode;
acquiring from the external device result data obtained after performing the encoding process; and
calling the image encoding module to cause the image encoding module to complete cloud desktop image sequence compression encoding according to the result data.

The present disclosure also provides a cloud desktop system, wherein the system includes a server and at least one external device; the server host includes an image encoding module, a memory, and a processor; and the memory stores a computer program for image sequence compression encoding, the processor executing the computer program to implement the following steps:
calling an external device to perform an encoding process which is preset in the preset image encoding module and can be processed in a pipeline parallel mode;
acquiring from the external device result data obtained after performing the encoding process; and
calling the image encoding module to cause the image encoding module to complete cloud desktop image sequence compression encoding according to the result data.

The present disclosure further provides a computer readable storage medium, wherein the medium stores a computer program for image sequence compression encoding, the computer program being executed by at least one processor to implement the following steps:
calling an external device to perform an encoding process which is preset in a preset image encoding module and can be processed in a pipeline parallel mode in a server;
acquiring from the external device result data obtained after performing the encoding process; and
calling the image encoding module to cause the image encoding module to complete cloud desktop image sequence compression encoding according to the result data, where the server and a plurality of external devices constitute a cloud desktop system.

The beneficial effects of the disclosure are as follows:
According to the cloud desktop system, the image sequence compression encoding method and the medium thereof in the present disclosure, an encoding process which is suitable for being processed in a pipeline parallel mode, has higher complexity and consumes more CPU resources in the desktop image sequence compression encoding process is transferred from the server host end to the external device for execution. While the encoding speed is increased, the CPU usage of the server host can also be reduced. Accordingly, one server can create more virtual machines for more users to use, which reduces costs and solves the problem that the user's operation is not smooth under the condition of high screen resolution.

Further aspects will be appreciated when the drawings and detailed description are read and understood.

### BRIEF DESCRIPTION OF DRAWINGS

Fig. 1 is a flowchart of an image encoding method for a cloud desktop system in an embodiment of the present disclosure;
Fig. 2 is a system framework diagram of a cloud desktop system based on OpenCL heterogeneous framework in an embodiment of the present disclosure;
Fig. 3 is a schematic structural diagram of a cloud desktop system in an embodiment of the present disclosure.

### DETAILED DESCRIPTION

The present disclosure provides a cloud desktop system, and an image sequence compression encoding method and medium thereof. The present disclosure will be further described in detail below with reference to the accompanying drawings in conjunction with the embodiments. It is understood that the specific embodiments described herein are merely illustrative of the disclosure and are not intended to be limiting.

### Example one

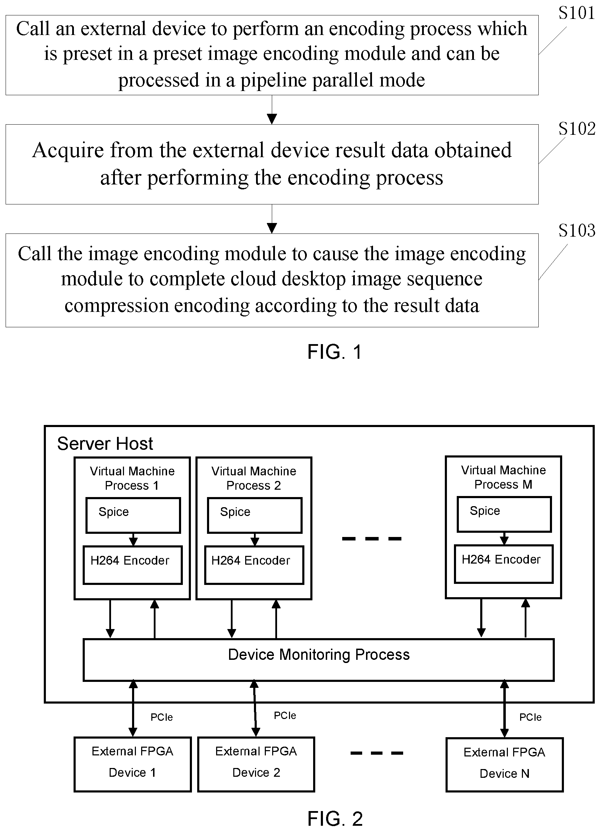

As shown in Fig. 1, an embodiment of the present disclosure provides an image encoding method for a cloud desktop system, wherein the system includes a server and at least one external device, the server and the at least one external device being connected by a bus. The method is used for the server, and includes the following steps S101 to S103:
At step S101, calling an external device to perform an encoding process which is preset in a preset image encoding module and can be processed in a pipeline parallel mode.
At step S102, acquiring from the external device result data obtained after performing the encoding process.
At step S103, calling the image encoding module to cause the image encoding module to complete cloud desktop image sequence compression encoding according to the result data.

In the embodiment of the present disclosure, both the server and the external device (peripheral) belong to the server end of the cloud desktop system. Therefore, in order to distinguish the server from the external device, "server host" is used in the present disclosure to represent the server.

The embodiment of the present disclosure calls an external device to perform an encoding process which is preset in a preset image encoding module and can be processed in a pipeline parallel mode, then acquires from the external device result data obtained (by the external device) after performing the encoding process, and finally calls the image encoding module so that the image encoding module completes the cloud desktop image encoding according to the result data. Accordingly, an encoding process which is suitable for being processed in a pipeline parallel mode, has higher complexity and consumes more CPU resources in the desktop image sequence compression encoding process is transferred from the server host end to the external device for execution. While the encoding speed is increased, the CPU usage of the server host can also be reduced. Accordingly, one server can create more virtual machines for more users to use, which reduces costs and solves the problem that the user's operation is not smooth under the condition of high screen resolution.

Of course, the embodiment of the present disclosure can adopt the OpenCL (Open Computing Language) standard in the specific implementation, so that the program has strong portability.

The bus can be a PCIe (peripheral component interconnect express) bus.

An encoder of H.264 standard may be chosen for the encoding module in the embodiment of the present disclosure; a field programmable gate array may be chosen for the external device; and a discrete cosine transform process may be chosen for the encoding process.

For example, as shown in Fig. 2, in the implementation of the present disclosure, the server is the host end (at the host side), FPGA (Field-Programmable Gate Array) is the device end (at the device side), and the server and the FPGA are connected by a PCIe bus. The feature of high bandwidth of the PCIe bus makes the communication delay between the host and the device end negligible. One host can connect to multiple FPGA devices. The Spice server (virtual machine process) runs on the server host end. The part of the H.264 encoding process which is not suitable for being processed in the pipeline parallel mode also runs on the server host end; while the part of the H.264 encoding process which is more complex and is suitable for being processed in a pipeline parallel mode, for example, a DCT (Discrete Cosine Transform) process, runs on the FPGA device.

In the embodiment of the present disclosure, the step of calling the external device to perform the encoding process which is preset in the preset image encoding module and can be processed in the pipeline parallel mode may include:
establishing, after monitoring a connection request from any virtual machine, an association between the virtual machine and the external device; and
calling the associated external device to perform the encoding process.

After monitoring the connection request of any virtual machine and before establishing the connection between the virtual machine and the external device, the method may further include:
running a device monitoring process to cause the device monitoring process to start a main thread for monitoring a virtual machine request, and to cause the device monitoring process to check available external devices and create a plurality of interactive threads according to the number of the available external devices.

The step of acquiring from the external device result data obtained after performing the encoding process may include:
creating a socket to cause the assigned interactive thread to obtain the result data from the associated external device through the socket and transmit the result data to the image encoding module.

The image encoding method in the embodiment of the present disclosure is specifically described according to a specific cloud desktop system of OpenCL heterogeneous framework. The method includes the following steps S1 to S8:
At step S1: A device monitoring process is started. The device monitoring process creates a main thread. The main thread creates a Socket according to the preset port number and performs monitoring (listening). At the same time, the device monitoring process checks all available FPGA devices by calling (invoking) the OpenCL API (Application Programming Interface), creates the same number (N) of interactive threads according to the number of the available FPGA devices, and assigns one fixed, external FPGA device (FPGA peripheral) to each interactive thread. The interactive thread is responsible for the interaction between the external FPGA device and an H.264 encoder of the host. When the interactive thread is just created, it will initialize its corresponding FPGA device platform, and create a kernel program by calling the OpenCL API. The kernel program completes the DCT transformation during the encoding process.
At step S2: When starting to encode the desktop image sequence, the Spice Server calls the Open function of the H.264 encoder. In the Open function, a Socket is also created to request establishment of a connection with the device monitoring process, in addition to completing the initialization of the encoder.
At step S3: When the main thread of the device monitoring process monitors (hears) a connection request of a virtual machine, the main thread establishes a connection with the virtual machine in response to the request, and allocates, according to the load sharing principle, one interactive thread to handle the interaction between the virtual machine and the external FPGA device. The interactive thread establishes an association between the virtual machine and its corresponding external FPGA device.
At step S4: The Spice Server sends the YUV (a color encoding method) data of the captured desktop image to the H.264 encoder for compression.
At step S5: At the time that the H.264 encoder performs compression encoding on the received YUV data, when running to a stage corresponding to the kernel in the above step S1, the currently required data is transmitted to the device monitoring process through Socket communication (a communication via Socket). When the interactive thread of the device monitoring process receives the data, it executes the kernel function by calling the OpenCL API on the external FPGA device corresponding to the virtual machine. After the execution of the kernel function is completed, the interactive thread reads the execution result from the external FPGA device, and then sends the execution result to the H.264 encoder through the Socket communication.
At step S6: The H.264 encoder of the virtual machine process returns the compressed code stream to the Spice Server when completing the encoding of the current image.
At step S7: After all the encoding is completed, the virtual machine process Spice Server will call Close function of the H.264 encoder. In the Close function, in addition to completing the release of the encoder, a Uninit command is also sent through the Socket communication. After the interactive program receives the Uninit command, the interactive program disconnects the association between the virtual machine and its corresponding external FPGA device, and then the Socket communication between the virtual machine process and the device monitoring process is ended.
At step S8: The works of Kernel release and memory release are performed on the corresponding external FPGA device before each interactive thread is destroyed.

### Example two

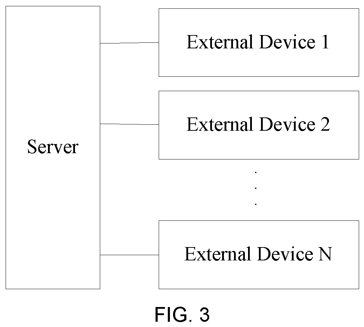

As shown in Fig. 3, an embodiment of the present disclosure provides a cloud desktop system, wherein the system includes a server and at least one external device; the server host includes an image encoding module, a memory, and a processor; and the memory stores a computer program for image sequence compression and encoding, the processor executing the computer program to implement the following steps:
calling an external device to perform an encoding process which is preset in the preset image encoding module and can be processed in a pipeline parallel mode;
acquiring from the external device result data obtained after performing the encoding process;
calling the image encoding module to cause the image encoding module to complete cloud desktop image sequence compression encoding according to the result data.

The encoding module is an encoder of H.264 standard; the external device is a field programmable gate array; and the encoding process is a discrete cosine transform process.

In the embodiment of the present disclosure, the step of calling the external device to perform the encoding process which is preset in the preset image encoding module and can be processed in the pipeline parallel mode may include:
establishing, after monitoring (hearing) a connection request from any virtual machine, an association between the virtual machine and the external device; and
calling the associated external device to perform the encoding process.

The processor executes the computer program to further implement the following steps:
running a device monitoring process to cause the device monitoring process to start a main thread for monitoring a virtual machine request, and to cause the device monitoring process to check available external devices and create a plurality of interactive threads according to the number of the available external devices.

The step of establishing, after monitoring the connection request from any virtual machine, the association between the virtual machine and the external device includes:
establishing a connection with the virtual machine after the main thread monitors the connection request of the virtual machine, and allocating an interactive thread, so that the allocated interactive thread establishes an association between the virtual machine and the external device corresponding to the interactive thread.

The step of acquiring from the external device result data obtained after performing the encoding process includes:
creating a socket to cause the assigned interactive thread to obtain the result data from the associated external device through the socket and transmit the result data to the image encoding module.

The embodiment of the present disclosure calls an external device to perform an encoding process which is preset in a preset image encoding module and can be processed in a pipeline parallel mode by calling an external device, then acquires from the external device result data obtained after performing the encoding process, and finally calls the image encoding module so that the image encoding module completes the cloud desktop image encoding according to the result data. Accordingly, an encoding process which is suitable for being processed in a pipeline parallel mode, has higher complexity and consumes more CPU resources in the desktop image sequence compression encoding process is transferred from the server host end to the external device for execution. While the encoding speed is increased, the CPU usage of the server host can also be reduced. Accordingly, one server can create more virtual machines for more users to use, which reduces costs and solves the problem that the user's operation is not smooth under the condition of high screen resolution.

An embodiment of the present disclosure is illustrated.

As shown in Fig. 2, the embodiment of the present disclosure aims to implement a cloud desktop system based on an OpenCL (Open Computing Language) heterogeneous framework, in which a heterogeneous framework based on the OpenCL standard is adopted on the server end of the cloud desktop. A part of the desktop image sequence compression encoding is migrated to an external device, wherein the external device can be an FPGA. Thus, the external device constitutes a hardware acceleration device to reduce the CPU usage of the server, to improve the cloud desktop user's experience, and to solve the problem that the user's operation is not smooth in the case of high screen resolution.

In the embodiment of the disclosure, on the server of the cloud desktop system, a set of FPGA hardware acceleration devices are connected through the PCIe interface. The server host end uses the device monitoring process to manage the acceleration devices, and allocate the images sequence compression encoding DCT (Discrete Cosine Transform) modules for different desktops to the FPGA hardware acceleration devices according to the current CPU resources occupation. Thus, the performance of the server system is improved and the lagging/unsmooth problem caused by the CPU resource bottleneck is solved. On the FPGA acceleration subsystem, after the input desktop stream sub-picture sequence is processed by the logic circuit, the output energy is concentrated on the transformation result of a low-frequency part, and the result is returned to the server host through the PCIe interface. Here, the server cooperates with the acceleration devices to complete the compression encoding process of the desktop stream in the cloud desktop system.

Specifically, in the embodiment of the disclosure, the system hardware is composed of a server and FPGA hardware acceleration devices. The acceleration devices may be FPGAs, but are not limited to such type of hardware device. The server and the FPGA devices are connected by a PCIe bus, and one server may be connected to multiple FPGA devices. Besides, DCT is completed on the FPGAs, which effectively reduces the FPGA resources, reduces requirement on the number of FPGAs, and thus reduces the cost increase caused by increasing the number of FPGAs.

The embodiment of the present disclosure performs a device monitoring process on the server end and the device monitoring process is responsible for the management of the FPGA devices and the interaction between the FPGA devices and the H.264 encoders of the host. For example:
A device monitoring process functioning for control and interaction on the server host end, the device monitoring process starts a main thread. The main thread creates a Socket and performs monitoring. At the same time, the device monitoring process checks all available FPGA devices by calling the OpenCL API, and creates the same number (N) of interactive threads according to the number of available FPGA devices. One interactive thread is responsible for the interaction between one external FPGA device and the host H.264 encoder.

When the interactive thread is just created, it will initialize its corresponding FPGA device platform, and create a kernel program by calling the OpenCL API. The kernel program completes the DCT transformation process during the encoding process. When starting to encode the desktop image sequence, the Spice Server calls the Open function of the H.264 encoder. In the Open function, a Socket is also created to request establishment of a connection with the device monitoring process, in addition to completing the initialization of the encoder. On the server host end, when the main thread of the device monitoring process monitors a connection request of a virtual machine, a connection is established in response to the request, and one interactive thread is allocated according to the load sharing principle to handle the interaction between the virtual machine and the external FPGA device. The interactive thread establishes an association between the virtual machine and its corresponding external FPGA device. At the time that the H.264 encoder of the virtual machine process performs compression encoding of the H.264 standard on the desktop image sequence, when running to a stage corresponding to the kernel in the first step, the kernel_type to be called currently and the required data are transmitted to the device monitoring process through the Socket communication. When the interactive thread of the device monitoring process receives the data, it executes the kernel function corresponding to the kernel type by calling the OpenCL API on the external FPGA device corresponding to the virtual machine. After the execution of the kernel function is completed, the interactive thread reads the execution result from the external FPGA device, and then sends the execution result to the H.264 encoder through the Socket communication. After all the encoding is completed, the virtual machine process Spice Server will call the Close function of the H.264 encoder. In the Close function, in addition to completing the release of the encoder, a Uninit command is also sent through the Socket communication. After the interactive program receives the Uninit command, the interactive program disconnects the association between the virtual machine and its corresponding external FPGA device, and then the Socket communication between the virtual machine process and the device monitoring process is ended. The works of Kernel release and memory release should be performed on the corresponding external FPGA device before each interactive thread is destroyed.

The embodiment of the present disclosure transfers the DCT encoding module which is suitable for being processed in a pipeline parallel mode, has higher complexity and consumes more CPU resources in the desktop image sequence compression encoding process from the server host end to the external FPGA device for execution. While the encoding speed is increased, the CPU usage of the server host can also be reduced. Accordingly, one server can create more virtual machines for more users to use, which reduces costs and solves the problem that the user's operation is not smooth under the condition of high screen resolution. Besides, the present disclosure adopted OpenCL standard, making the portability of the program strong.

### Example three

An embodiment of the present disclosure provides a computer readable storage medium, wherein the medium stores a computer program for image sequence compression encoding, the computer program being executed by at least one processor to implement the following steps:
calling an external device to perform an encoding process which is preset in a preset image encoding module and can be processed in a pipeline parallel mode in a server;
acquiring from the external device result data obtained after performing the encoding process;
calling the image encoding module to cause the image encoding module to complete cloud desktop image sequence compression encoding according to the result data, where the server and a plurality of external devices constitute a cloud desktop system.

In the embodiment of the present disclosure, the calling the external device to perform the encoding process which is preset in the preset image encoding module and can be processed in the pipeline parallel mode may include:
establishing, after monitoring a connection request from any virtual machine, an association between the virtual machine and the external device;
calling the associated external device to perform the encoding process.

The processor executes the computer program to further implement the following steps:
running a device monitoring process to cause the device monitoring process to start a main thread for monitoring a virtual machine request, and to cause the device monitoring process to check available external devices and create a plurality of interactive threads according to the number of the available external devices.
the step of establishing, after monitoring the connection request from any virtual machine, the association between the virtual machine and the external device includes:
   establishing a connection with the virtual machine after the main thread monitors the connection request of the virtual machine, and allocating an interactive thread, so that the allocated interactive thread establishes an association between the virtual machine and the external device corresponding to the interactive thread.

The step of acquiring from the external device result data obtained after performing the encoding process includes:
creating a socket to cause the assigned interactive thread to obtain the result data from the associated external device through the socket and transmit the result data to the image encoding module.

The encoding module is an encoder of H.264 standard; the external device is a field programmable gate array; and the encoding process is a discrete cosine transform process.

A person skilled in the art will appreciate that functional modules or units in all or part of the steps of the method, the system and the apparatus disclosed above may be as software, firmware, hardware and appropriate combinations thereof. In the hardware implementation, the division of functional modules or units mentioned in the above description may not correspond to the division of physical components. For example, one physical component may have multiple functions, or one function or step may be executed jointly by several physical components. Some or all components may be implemented as software executed by processors such as digital signal processors or microcontrollers, hardware, or integrated circuits such as application specific integrated circuits. Such software may be distributed on a computer-readable medium, which may include a computer storage medium (or a non-transitory medium) and a communication medium (or a transitory medium). As is known to those skilled in the art, the term, computer storage medium, includes volatile and nonvolatile, removable and non-removable media implemented in any method or technology for storing information (such as computer-readable instructions, data structures, program modules or other data). The computer storage medium includes, but is not limited to, a random access memory (RAM), a read-only memory (ROM), an electrically erasable programmable read-only memory (EEPROM), a flash memory or other memory technologies, a compact disc-read only memory (CD-ROM), a digital versatile disc (DVD) or other optical disc storage, a magnetic cassette, a magnetic tape, a magnetic disk storage or other magnetic storage apparatuses, or any other medium used for storing desired information and can be accessed by the computer. Moreover, it is well known to a person skilled in the art that communication media typically includes computer readable instructions, data structures, program modules, or other data in a modulated data signal, such as a carrier wave or other transport mechanism, and can include any information delivery media.

While the present application has been described with respect to the specific examples of the present disclosure, a person skilled in the art can devise modifications of the present disclosure without departing from the inventive concept. Various modifications of the present disclosure can be made by a person skilled in the art without departing from the scope of the present disclosure, which is still within the scope of the present disclosure.

### Industrial Applicability

According to the cloud desktop system, the image sequence compression encoding method and the medium thereof in the present disclosure, an encoding process which is suitable for being processed in a pipeline parallel mode, has higher complexity and consumes more CPU resources in the desktop image sequence compression encoding process is transferred from the server host end to the external device for execution. While the encoding speed is increased, the CPU usage of the server host can also be reduced. Accordingly, one server can create more virtual machines for more users to use, which reduces costs and solves the problem that the user's operation is not smooth under the condition of high screen resolution.

## Claims

1. An image sequence compression encoding method for a cloud desktop system, wherein the system comprises a server and at least one external device which are connected by a bus; and the method is used for the server and comprises:
calling an external device to perform an encoding process which is preset in a preset image encoding module and can be processed in a pipeline parallel mode;
acquiring from the external device result data obtained after performing the encoding process;
calling the image encoding module to cause the image encoding module to complete cloud desktop image sequence compression encoding according to the result data.

2. The method according to claim 1, wherein the calling the external device to perform the encoding process which is preset in the preset image encoding module and can be processed in the pipeline parallel mode comprises:
establishing, after monitoring a connection request from any virtual machine, an association between the virtual machine and the external device;
calling the associated external device to perform the encoding process.

3. The method of claim 2, wherein the method further comprises:
running a device monitoring process to cause the device monitoring process to start a main thread for monitoring a virtual machine request, and to cause the device monitoring process to check available external devices and create a plurality of interactive threads according to the number of the available external devices.

4. The method of claim 3, wherein the establishing, after monitoring the connection request from any virtual machine, the association between the virtual machine and the external device comprises:
establishing a connection with the virtual machine after the main thread monitors the connection request of the virtual machine, and allocating an interactive thread, so that the allocated interactive thread establishes an association between the virtual machine and the external device corresponding to the interactive thread.

5. The method of claim 4, wherein the acquiring from the external device result data obtained after performing the encoding process comprises:
creating a socket to cause the assigned interactive thread to obtain the result data from the associated external device through the socket and transmit the result data to the image encoding module.

6. The method according to any one of claims 1 to 5, wherein the encoding module is an encoder of H.264 standard; the external device is a field programmable gate array; and the encoding process is a discrete cosine transform process.

7. A cloud desktop system, wherein the system comprises a server and at least one external device; the server host comprises an image encoding module, a memory, and a processor; and the memory stores a computer program for image sequence compression encoding, the processor executing the computer program to implement the following steps:
calling an external device to perform an encoding process which is preset in the preset image encoding module and can be processed in a pipeline parallel mode;
acquiring from the external device result data obtained after performing the encoding process;
calling the image encoding module to cause the image encoding module to complete cloud desktop image sequence compression encoding according to the result data.

8. The system of claim 7, wherein the calling the external device to perform the encoding process which is preset in the preset image encoding module and can be processed in the pipeline parallel mode comprises:
establishing, after monitoring a connection request from any virtual machine, an association between the virtual machine and the external device;
calling the associated external device to perform the encoding process.

9. The system of claim 8 wherein the processor executes the computer program to further implement the following steps:
running a device monitoring process to cause the device monitoring process to start a main thread for monitoring a virtual machine request, and to cause the device monitoring process to check available external devices and create a plurality of interactive threads according to the number of the available external devices.

10. The system of claim 9, wherein the establishing, after monitoring the connection request from any virtual machine, the association between the virtual machine and the external device comprises:
establishing a connection with the virtual machine after the main thread monitors the connection request of the virtual machine, and allocating an interactive thread, so that the allocated interactive thread establishes an association between the virtual machine and the external device corresponding to the interactive thread.

11. The system of claim 10, wherein the acquiring from the external device result data obtained after performing the encoding process comprises:
creating a socket to cause the assigned interactive thread to obtain the result data from the associated external device through the socket and transmit the result data to the image encoding module.

12. The system of any of claims 7-11, wherein the encoding module is an encoder of H.264 standard; the external device is a field programmable gate array; and the encoding process is a discrete cosine transform process.

13. A computer readable storage medium, wherein the medium stores a computer program for image sequence compression encoding, the computer program being executed by at least one processor to implement the following steps:
calling an external device to perform an encoding process which is preset in a preset image encoding module and can be processed in a pipeline parallel mode in a server;
acquiring from the external device result data obtained after performing the encoding process;
calling the image encoding module to cause the image encoding module to complete cloud desktop image sequence compression encoding according to the result data, where the server and a plurality of external devices constitute a cloud desktop system.
